# EUROPEAN PATENT SPECIFICATION

(11) **EP 1 961 060 B1**
(45) Date of publication and mention of the grant of the patent: **20.12.2017**
(21) Application number: 06827875.3
(22) Date of filing: 17.11.2006
(51) Int. Cl.: H01M 4/82, H01M 4/62, H01M 6/40

(54) **HYBRID THIN-FILM BATTERY**
HYBRID-DÜNNFILMBATTERIE
BATTERIE HYBRIDE EN COUCHE MINE

(30) Priority: 17.11.2005 US 737613 P; 17.01.2006 US 759479 P; 16.03.2006 US 782792 P
(43) Date of publication of application: 27.08.2008
(73) Proprietor: Sapurast Research LLC, Wilmington, DE 19801 (US)
(72) Inventor: NEUDECKER, Bernd, J., Littleton, CO 80127 (US); SNYDER, Shawn, W., Golden, CO 80401 (US)
(74) Representative: Barnfather, Karl Jon
(86) International application number: PCT/US2006/044827
(87) International publication number: WO 2007/061928

(56) References cited:
- US-A- 5 569 520
- US-A- 5 612 153
- US-A- 5 741 406
- US-A1- 2004 048 157
- US-A1- 2004 106 046
- US-B1- 6 168 884
- US-B1- 6 664 006

## Description

### RELATED APPLICATIONS

The present application claims the benefit under 35 U.S.C. [section] 119 of U.S. Patent Application Serial No. 60/737,613, filed November 17, 2005, U.S. Patent Application Serial No. 60/759,479 filed January 17, 2006, and U.S. Patent Application Serial No. 60/782,792, filed March 16, 2006; and is a continuation-in-part, and claims the benefit under 35 U.S.C. §120, of U.S. patent application Serial No. 11/209,536, entitled "Electrochemical Apparatus with Barrier Layer Protected Substrate," filed 23 August 2005, which is a continuation, and claims the benefit under 35 U.S.C. §120, of U.S. Patent Application Serial No. 11/374,282, converted from 119(e) of U.S. provisional application Serial No. 60/690,697, and filed on June 15, 2005, entitled "Electrochemical Apparatus with Barrier Layer Protected Substrate," which is a continuation-in-part, and claims the benefit under 35 U.S.C. §120, of U.S. Patent Application Serial No. 10/215,190, filed 9 August 2002, entitled "Methods of and device for encapsulation and termination of electronic devices," now U.S. Patent No. 6,916,679, issued 12 July 2005.

### FIELD OF THE INVENTION

The field of this invention relates to electrochemical devices and methods of manufacturing thereof, and more particularly, the composition, method of depositing, and fabrication of solid-state, thin-film, secondary and primary electrochemical devices, including batteries.

### BACKGROUND

Thick positive cathodes are good for creating energy-rich thin-fihn batteries. A thick positive cathode substantially increases the active cathode mass per unit area. Unfortunately, producing such cathodes with typical vacuum vapor phase processes has been problematic.

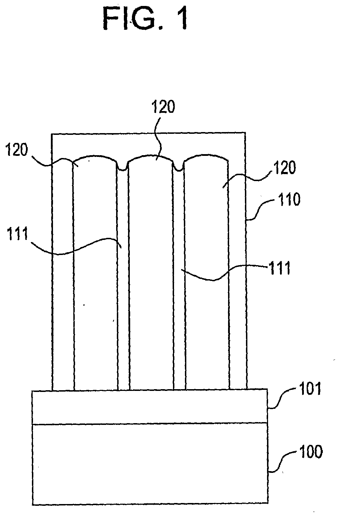

Cathodes made with a typical vacuum vapor phase method have a number of limitations. For instance, vacuum vapor phase deposited materials typically grow in columns as schematically shown in FIG. 1. This figure depicts schematically and in cross-sectional view three microscopic columns, grown by a vacuum vapor phase deposition method, of the positive cathode layer of an electrochemical device. As the columns grow through the process, the bases of these columns remain anchored to the substrate surface and the cross sectional area of these bases remains virtually fixed as the height of the columns grows. As the height of the columns increases, the aspect ratio (height of column / width of column) increases and the cathode film consisting of these columns and thus the entire device becomes mechanically unstable, typically around an aspect ratio of 15. Thus, there are limitations to the height, and therefore the thickness, of columns grown with a vacuum deposition processes. Limitations on the height directly correspond to the thickness of the cathode and the energy of an electrochemical device per unit area that can be produced using a vacuum vapor phase deposition method. Furthermore, thick cathodes take a relatively long time to grow using a vacuum vapor phase process and are, therefore, quite expensive. For instance, LiCoO2 positive cathodes grown in a vacuum vapor phase deposition method above about 3µm become overly expensive because of their long deposition time.

Thus, there is demand for electrochemical devices whose cathodes can be produced thick and reliably while being fabricated quickly and inexpensively. Further, it would be desirable to accomplish these demands using any of the many well-known non- vapor phase deposition techniques and processes, such as slurry coating, Meyer rod coating, direct and reverse roll coating, doctor blade coating, spin coating, electrophoretic deposition, sol-gel deposition, spray coating, dip coating, and ink-jetting, to name a few.

Depositing a thicker cathode in order to increase the energy of an electrochemical device per unit area results in an increased, overall thickness of the device. Because an overall thickness increase of a milli, micro, or nano device is typically undesirable, the device manufacturer has to explore options of how to compensate for or offset such a thickness increase. A generally valid and desirable approach is to minimize the thickness and volume of all of the non-energy providing components inside an electrochemical device.

One of the options is to reduce the non-energy providing packaging of an electrochemical device. Both the encapsulation and the substrate are inherent and usually large, fractional parts of the packaging.

For instance, the reduction of an encapsulation thickness from 100 micrometers, which is a typical thickness for a laminate encapsulation, to a true thin-film encapsulation in the range of 1-10 micrometers would allow the electrochemical device manufacturer, for example, to increase the thickness of the energy bearing cathode by almost 100 micrometers without any discernible overall thickness change of the device. This design approach substantially improves the volumetric quantities of energy, capacity, and power of the electrochemical device. Because these physical performance quantities are required to be delivered in the smallest volume possible for most any milli, micro, or nano electrochemical device, the reduction of the non-energy providing components inside an electrochemical device is critically important for its acceptance in the marketplace.

The other option is to fabricate an electrochemical device onto the thinnest possible substrate, if used, traded or sold as a standalone device. This is different from the non-standalone case wherein the device manufacturer may exploit an existing, free surface in an electronic device (chip surface, printed circuit board surface, etc.) and then directly integrate, fabricate or deposit the electrochemical device onto that free surface. This surface then serves as the electrochemical device's substrate as well. One may consider such an electrochemical device being configured with a zero-thickness substrate because no further substrate thickness was introduced by the electrochemical device into the final electronic device. In the more common, standalone case, however, the limits of substrate thinness are reached when it does not provide adequate chemical and physical, mainly mechanical, protection or functionality anymore to support the electrochemical device. Because most vacuum deposited cathode materials require high-temperature processing to fully develop all of their physical properties, which in turn creates film stresses that are translated into the substrate, the mechanical properties of these vacuum vapor deposited cathode materials may challenge any substrate in terms of mechanical deformation.

The typical result of vacuum vapor phase deposited films in conjunction with high-temperature processing is a bending, warping, or general deformation of the substrate and thus the entire electrochemical device. If this situation occurs, then completing the fabrication of the electrochemical device becomes difficult, in addition to the mere fact that a deformed electrochemical device is not well suited for device integration. In contrast, non- vapor phase deposited cathode materials may be fabricated with most or even all of their important physical properties already developed at the time of deposition, so that any high- temperature processing becomes redundant. Hence, non- vapor phase deposited cathode materials and other components of an electrochemical device create less stress in the substrate and. allow the use of a thinner substrate without the risk of substantially deforming it.

Accordingly, there is also a need for capsulation that exhibits fairly high-temperature characteristics.

Thus, there is demand for an electrochemical device (i) whose cathode can be produced thick and reliably while being fabricated quickly and inexpensively, (ii) whose substrate thickness is as thin as possible while not being deformed by the component layers of the electrochemical device, (iii) whose encapsulation is fabricated as thin as possible while still providing adequate protection against the ambient in which these devices are operated, and/or (iv) whose encapsulation is composed of high-temperature materials that provide the entire electrochemical device with increased thermal resilience.

US2004106046 discloses a lithium ion secondary battery including a positive electrode, a negative electrode and a thin film solid electrolyte including lithium ion conductive inorganic substance. The thin film solid electrolyte has thickness of 20 micrometres or below and is formed directly on an electrode material or materials for the positive electrode and/or the negative electrode.

US2004048157 concerns the manufacture and use of multilayer thin-film batteries, such as inverted lithium-free batteries. The battery may include a lithium vanadium oxide positive cathode or negative anode.

US5741406 disloses a method of forming a thin dense electrolyte for a solid oxide fuel cell.

### SUMMARY

Various aspects and embodiments of the present invention, as described in more detail and by example below, address certain of the shortfalls of the background technology and emerging needs in the relevant industries.

According to a first aspect of the invention, there is provided a battery according to appended claim 1. According to a second aspect of the invention, there is provided a method of manufacturing a battery according to appended claim 43. Preferable features of the invention are defined in the dependent claims.

One aspect of the invention is an electrochemical device comprising a positive cathode greater than about 0.5µm and less than about 200µm thick; a thin electrolyte less than about 10µm thick; and an anode less than about 30µm thick. The device may also comprise a substrate, current collectors, terminals, a moisture protection layer, and an encapsulation, m an embodiment of the invention, the cathode may be greater than about 5µm and less than about 100µm thick. The cathode may also be greater than about 30µm and less than about 80µm thick.

Another aspect of the invention is an electrochemical device comprising a non-vapor phase deposited cathode, an anode, and an electrolyte that is less than 10µm thick. In an embodiment of the invention, the cathode maybe greater than about 0.5µm and less than about 200µm thick, and the anode may be less than about 30µm thick.

A cathode in accordance with an aspect of an embodiment of the invention may be non- vapor phase deposited. The cathode may be deposited by one of the following methods: slurry coating, Meyer rod coating, direct and reverse roll coating, doctor blade coating, spin coating, electrophoretic deposition or ink-jetting.

The cathode may comprise LiCoO₂ LiMn₂O₄, LiMnO₂, LiNiO₂, LiFePO₄, LiVO₂, and any mixture or chemical derivative thereof. Alternatively these cathode materials may be doped with elements from the groups 1 through 17 of the periodic table.

In an embodiment, the electrolyte may comprise lithium phosphorus oxynitride (LiPON). The electrolyte may comprise a thin-film electrolyte. The electrolyte may be deposited by a vacuum vapor phase growth method or non-vapor phase method.

The anode may comprise lithium, a lithium alloy or a metal, which can form a solid solution or a chemical compound with lithium, or a so-called lithium-ion compound suitable for use as a negative anode material in lithium based batteries, such as, for example, Li₄Ti₅O₁₂.

In a further aspect of an embodiment of the invention, an electrochemical device may also be encapsulated with an encapsulation process selected from the group consisting of vacuum vapor phase grown thin-film encapsulation, pressure - heat lamination as described by Snyder et al. in U.S. Patent No. 6,916,679, the contents of which are hereby incorporated herein by reference in its entirety, metal foil attachment, and metal canning.

The device may further comprise a cathode current collector and an optional anode current collector on top or underneath of the thin electrolyte layer. The electrolyte immediately underneath the optional anode current collector may be protected by a moisture barrier, such as ZrO₂, if the encapsulation has an opening that allows the optional anode current collector to be in direct contact with ambient atmosphere.

According to an aspect of an embodiment of the present invention, non-vapor phase fabrication methods may be used to form a positive cathode, and the cathode combined with cell components of an electrochemical device that are all, or in part fabricated by vacuum vapor phase methods. Exemplary embodiments that utilize such a combination of different methods are viewed as hybrid fabrication methods and resulting devices, for example, a "hybrid thin-film battery."

In another aspect of an embodiment of the invention, the non-vapor phase fabrication of the positive cathode does not require a high-temperature fabrication step, which limits the stress development inside the component layer stack of an electrochemical device. This in turn allows use of a thinner substrate. Although thinner substrates may be prone to undesirable deformation under a given magnitude of stress, tradeoffs from using a thin substrate include a thinner electrochemical device for a given energy, capacity, and power performance. In other words, the use of a thinner substrate allows for increases in the volumetric quantities of energy, capacity, and power of an electrochemical device.

In another aspect, the cathode may be fabricated by a non-vapor phase method, and then may be mechanically embossed or otherwise formed into structures that increase its surface area within the same previously coated footprint, but with resulting increased maximum thickness and decreased minimum thickness. This structure or architecture minimizes the average distance of any volume element inside the cathode relative to the neighboring solid state thin-film electrolyte layer, which, unlike in electrochemical devices with gel or liquid type electrolytes, typically does not intimately penetrate the cathode bulk. Therefore, minimizing the average distance of any volume element inside the cathode relative to the solid state thin-film electrolyte reduces the ionic diffusion lengths during operation of the electrochemical device, which in turn improves its power capability.

A further aspect of an embodiment of the invention involves mixing electronic conducting material such as carbon into an embossed or other surface-increased cathode structure to minimize electronic diffusion lengths inside the cathode bulk to improve the power capability of an electrochemical device.

In another aspect of an embodiment of the invention, an electrochemical device includes a thin-film encapsulation comprising or consisting of inorganic material that exhibits fairly good high-temperature characteristics.

In another aspect of an embodiment of the invention, a thin-film encapsulation is used to minimize the thickness contribution of the encapsulation to the overall thickness of the electrochemical device.

In another aspect, a thin encapsulation, such as a thin-film encapsulation, can overcompensate or at least compensate in full, or in part for any thickness increase of the cathode relative to the overall thickness of the electrochemical device. In addition, and compared with, for example, a pressure-heat laminate, the use of a thinner encapsulation directly increases the volumetric quantities of energy, capacity, and power of a given electrochemical device.

In yet another aspect of an embodiment of the invention, a thin-film encapsulation consists of multiple inorganic layers that all exhibit intrinsic, high-temperature stability, a characteristic that raises to some extent the temperature stability and resilience of the entire electrochemical device.

### BRIEF DESCRIPTION OF THE FIGURES

The accompanying drawings, which are included to provide a further understanding of the invention and are incorporated in and constitute a part of this specification, illustrate exemplary embodiments of the invention that together with the description serve to explain the principles of the invention. In the drawings:
FIG. 1 schematically shows a cathode with columns grown according to methods used in the prior art.
FIG. 2 illustrates a hybrid thin-film electrochemical device according to an exemplary embodiment of the present invention.
FIG. 3 shows a cross-sectional view of a scanning electron micrograph of a composite LiCoO₂ cathode deposited by slurry coating and then coated with a LiPON thin-film electrolyte according to an exemplary embodiment of the invention.
FIG. 4 illustrates the electrochemical cycle behavior of an electrochemical device using the composite LiCoO₂ cathode and the LiPON thin-film from FIG. 3 according to an exemplary embodiment of the invention.
FIG. 5 depicts a scanning electron micrograph of a 9µm thick, fully crystalline LiCoO₂ positive cathode film fabricated by electrophoretic deposition according to an exemplary embodiment of the invention.
FIG. 6 shows the current-discharge voltage performance of a thin-film electrochemical device whose LiCoO₂ positive cathode was fabricated by electrophoretic deposition according to an exemplary embodiment of the invention.
FIG. 7 shows the reversible discharge capacity as a function of cycle number of a thin-film electrochemical device whose LiCoO₂ positive cathode was fabricated by electrophoretic deposition according to an exemplary embodiment of the invention.
FIG. 8 shows a scanning electron micrograph of an about 15µm thick, fully crystalline LiCoO₂ positive cathode film deposited by ink-jetting according to an exemplary embodiment of the invention.
FIG. 9 shows a hybrid thin-film electrochemical device without a substrate according to an exemplary embodiment of the present invention.
FIG. 10 shows a multi-layer thin-film used to encapsulate an electrochemical device according to an exemplary embodiment of the present invention.
FIG. 11 shows the electrochemical device shown in FIG. 2, including a modulating LiPON layer and a multi-layer thin-film encapsulation layer according to an exemplary embodiment of the present invention.
FIG. 12 shows an inverted thin-film battery configuration according to an exemplary embodiment of the present invention.
FIG. 13 shows an exemplary embodiment of an inverted thin-film battery.
FIG. 14 shows an exemplary embodiment of an embossed cathode layer.

### DETAILED DESCRIPTION

FIG. 1 illustrates a schematic cross-sectional view of a typical cathode layer 120 fabricated onto a metal current collector 101 over a substrate 100. In electrochemical devices produced by vacuum vapor phase deposition processes, the cathode may grow, for example, in columns 120 with inter-columnar void space 111. Also shown in FIG. 1 is a next layer in the fabrication process sequence of the thin-film electrochemical device, the electrolyte 110 with a typical bridging structure over the inter-columnar void space 111.

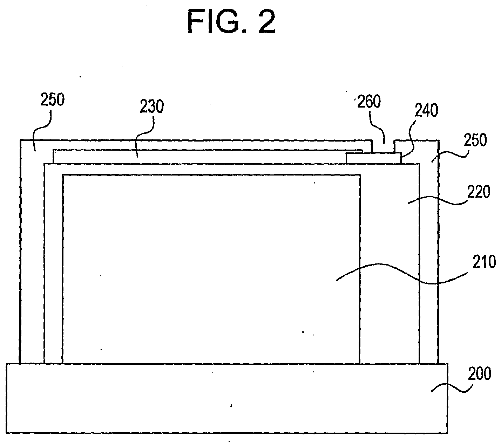

FIG. 2 shows a hybrid thin-film electrochemical device with a cathode 210 deposited without using a vacuum vapor phase process according to an exemplary embodiment of the present invention. In this embodiment, a cathode 210 is directly deposited onto a substrate 200. If metallically conducting, for example, the substrate 200 in this embodiment may also serve as the cathode current collector. Otherwise, a metallically conducting current collector (not shown) may be interposed between the substrate 200 and the cathode 210. The cathode 210, for example, may comprise LiCoO₂ LiMn₂O₄, LiMnO₂, LiNiO₂, LiFePO₄, LiVO₂, or any mixture or chemical derivative thereof. The cathode 210, for example, in one embodiment, may be between about 0.5µm and about 200µm thick. In a preferred embodiment, the cathode 210, for example, may be between about 5 and about 100µm thick. In a most preferred embodiment, for example, the cathode 210 may be between about 30 to about 80µm thick.

As shown in FIG. 2, an electrolyte layer 220 may be deposited on the top surface of the cathode layer 210. The electrolyte layer may, for example, comprise lithium phosphorus oxynitride (LiPON) or other solid state thin-film electrolytes such as LiAlF₄, as discussed in U.S. Patent No. 4,367,267, or Li₃PO₄ doped Li₄SiS₄, as discussed by Yamamura et al. in U.S. Patent No. 5,217,826. Both of these patents are incorporated herein in their entirety by reference. This electrolyte layer 220 may, for example, be less then about 10µm thick.

The cathode 210 is thick when compared to the relative sizes of the electrolyte 220, substrate 200, and an anode 230 formed over the electrolyte 220. In other embodiments, the relative size of the cathode 210 is also thick in comparison to the anode current collector 240, as well as a thin-film encapsulation 250.

The electrolyte 220 may be deposited on the cathode 210 using a variety of methods. These methods may include, for example, vacuum vapor phase growth methods or non-vapor phase methods. Vacuum vapor phase methods may include, for example, reactive or non-reactive RF magnetron sputtering, reactive or non-reactive DC diode sputtering, reactive or non-reactive thermal (resistive) evaporation, reactive or non-reactive electron beam evaporation, ion-beam assisted deposition, plasma enhanced chemical vapor deposition or the like. Non-vapor phase methods may include, for example, spin coating, ink-jetting, thermal spray deposition or dip coating. Spin coating is discussed, for example, by Stetter et al. in U.S. Patent No. 4,795,543; Venkatasetty in U.S. Patent No. 4,948,490; or Schmidt et al. in U.S. Patent No. 6,005,705. One such ink-jetting process is disclosed by Delnick in U.S. Patent No. 5,865,860. A thermal spray deposition process is disclosed by Inda in U.S. Patent Publication No. 2004/0106046. Dip coating is discussed by Kejha in U.S. Patent No. 5,443,602 and U.S. Patent No. 6,134,773. Each of the above patents and patent publications is incorporated herein by reference in its entirety.

As shown in FIG. 2, the next layer on top of the electrolyte is the thin negative anode layer 230. The thin anode 230 may comprise, for example, lithium, lithium alloys, metals that can form solid solutions or chemical compounds with lithium, or a so-called lithium-ion compound that may be used as a negative anode material in lithium based batteries, such as, for example, Li₄Ti₅O₁₂. The thin anode layer 230, for example, may be less than about 30µm thick. The thin anode may make contact with the anode current collector 240, which can be accessed electrically through an opening 260 in the encapsulation 250. In one embodiment the anode current collector is less than about 2µm thick. The thin-film encapsulation 250, for example, may be electrically conducting in certain areas and thus may, in some embodiments, serve as an anode current collector. In such embodiments, a separately deposited anode current collector 240 would not be necessary. The thin-film encapsulation 250 may, for example, be less than about 250µm thick.

The cathode 210 in FIG. 2 may be deposited on the substrate 200 using a variety of deposition methods. In one specific embodiment, the cathode material 210 is deposited using a non-vapor phase deposition method. Non-vapor phase deposition methods are not performed in a vacuum environment. A number of non-vapor phase deposition methods are known in the art. A few exemplary methods include, slurry coating, Meyer rod coating, direct and reverse roll coating, doctor blade coating, spin coating, electrophoretic deposition, sol-gel deposition, spray coating, dip coating, and ink-jetting, to name a few. These non-vapor phase, non-vacuum deposition methods may produce a single phase cathode or a composite cathode. The composite cathode may be deposited either on a nanoscopic, microscopic, or milliscopic scale and may consist of organic and/or inorganic matter which, in addition, may be polymerized, such as poly(vinyl pyrrolidone), sulfur nitride (SN)ₓ, nano-tubed carbon or acetylene black.

All of the depositions mentioned herein, may, for example, be followed by a drying step with temperatures below about 150°C, and/or a low-temperature drying and adhesion improving step with temperatures between about 150°C to about 400°C, and/or a high temperature anneal step ranging from about 400°C to about 1000°C. These steps may help, for example, in drying, improving adhesion, formation of the correct film phase, and/or crystallization. The cathode deposition material may be used either in pure form or mixed with binder material, with or without carbon-type, metal-type or alloy-type electrical conduction enhancers. When the cathode material comprises a mixed form rather than a pure form, such cathode materials may be composite cathode materials.

The method of slurry coating has been used in battery fabrication as shown, for example, by Hikaru et al. in U.S. Patent No. 6,114,062, or by Kinsman in U.S. Patent No. 4,125,686, which are incorporated herein in the entirety by reference. Slurry coating may lead to the deposition of a composite electrode consisting of the electrochemical active material, which is in the form of finely dispersed powder particles that are bonded together using a polymeric binder and some form of electrical conduction enhancer, such as carbon black or the like. Also, the slurry contains solvents which need to be evaporated and/or pyrolyzed after film deposition.

According to an exemplary embodiment, a composite cathode may be deposited from slurry including or consisting of fully crystalline LiCoO₂ powder, a polyimide binder, and a graphite electrical conduction enhancer. This slurry may then be coated onto an Al foil substrate and dried at temperatures below about 150°C in ambient air for less than about 2 days. Subsequently, in this embodiment, the cathode may be coated, for example, with an about 2µm LiPON thin-film electrolyte, an about 3µm thick Li negative anode, and an about 0.3µm thick Cu anode current collector. Finally, an about 100µm thick heat and pressure sensitive metal-polymer laminate, which may serve to encapsulate the electrochemical device, may be applied to the electrochemical device so that the electrochemical performance of the device may be tested in the ambient.

In an exemplary another embodiment, the dried slurry coating may require an additional drying, adhesion, formation, and/or crystallization steps at temperatures up to about 1000°C, as described above, to finalize the structure of the cathode or composite cathode. This method is quick, simple and can produce thick cathodes without using a vacuum vapor phase method. Furthermore, the resulting cathode does not have the mechanical instability as those produced by vacuum vapor phase deposition methods.

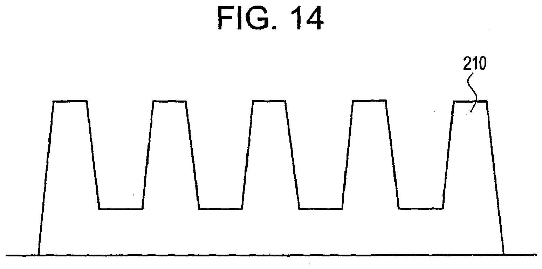

The cathode 210 in FIG. 2 maybe modified as shown, for example, in FIG. 14 through mechanical displacement or removal means including embossing, stamping, abrading, scraping, forming and the like. This layer modification may be performed on either the wet or completely dried cathode. This cathode surface modification improves the ion transfer efficiency between the cathode bulk and the thin-film electrolyte, for example, consisting of a LiPON layer (not shown), and thus improves the power performance of the electrochemical device.

Further improvement in power capability may be accomplished when cathode 210 comprises a composite material including or consisting of at least the electrochemically active cathode material, for example LiCoO₂ and a carbonaceous electronic conduction enhancer, which serves to minimize the electronic diffusion lengths inside the composite cathode bulk.

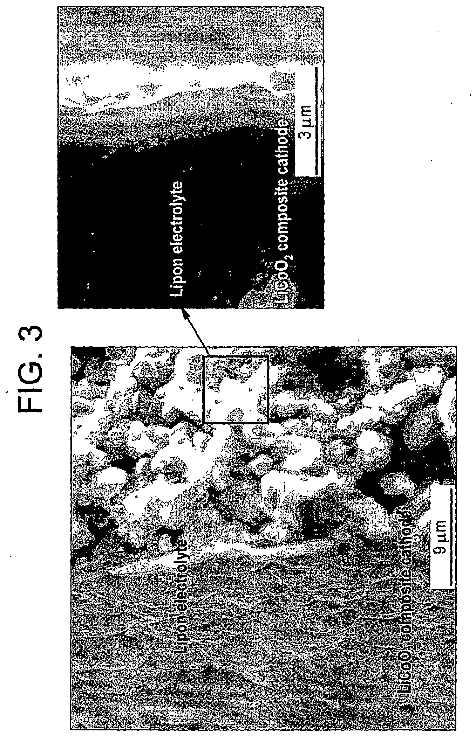

FIG. 3 shows a cross-sectional view of a scanning electron micrograph showing an exemplary LiPON coated composite cathode. The dimension calibration bar at the very left side in the left picture is about 9µm long; and the one in the insert picture on the right side represents a length of about 3µm.

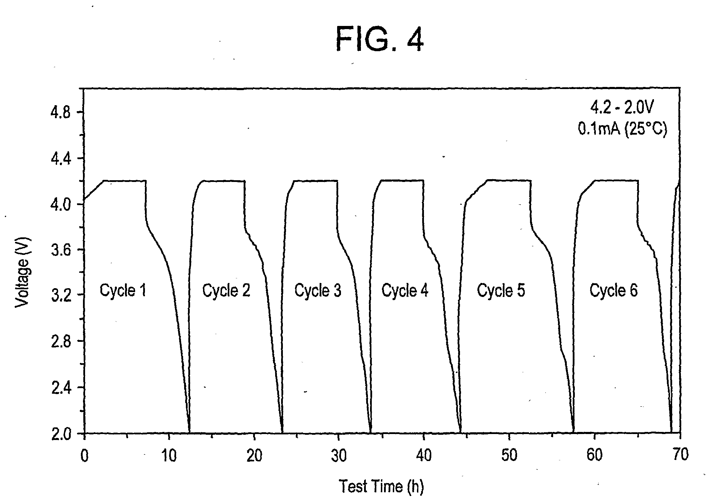

An electrochemical cycling performance of an electrochemical device according to an exemplary embodiment of the present invention is shown in FIG. 4.

According to an exemplary embodiment of the invention, a composite cathode may be deposited by Meyer rod coating of a viscous suspension or solution containing, for example, LiCoO₂ powder, as described by Principe et al. in U.S. Patent No. 6,079,352, which is incorporated herein by reference in its entirety. Alternatively, a polymeric binder, such as, for example, a polyimide, and/or an electrical conduction enhancer, such as graphite, may be admixed. This coating on a substrate, such as an Al foil substrate, may then be dried at temperatures below, for example, about 150°C in air for less than about 2 days. Subsequently, in this embodiment the cathode may be coated, for example, with an about 2µm LiPON thin-film electrolyte, an about 3µm thick Li negative anode, and an about 0.3µm thick Cu anode current collector. Finally, an about 100µm thick heat and pressure sensitive metal-polymer laminate, which may serve to encapsulate the electrochemical device, may be applied to the electrochemical device so that the electrochemical performance of the device may be tested in the ambient.

In an exemplary embodiment, a dried Meyer rod coating may require an additional drying, adhesion, formation, and/or crystallization steps at temperatures up to, for example, about 1000°C, as described above, to finalize the structure of the cathode or composite cathode. This method is quick, simple and can produce thick cathodes without using a vacuum vapor phase method. Furthermore, the resulting cathode does not have the mechanical instability as those produced by vacuum vapor phase deposition methods.

According to an exemplary embodiment of the invention, a composite cathode may be deposited by direct and/or reverse roll coating of a viscous suspension or solution, containing, for example, LiCoO₂ powder as described by Davis et al. in U.S. Patent No. 3,535,295. Alternatively, a polymeric binder, such as, for example, a polyimide, and/or an electrical conduction enhancer, such as graphite, may be admixed. This coating onto a substrate, such as an Al foil substrate, may then be dried at temperatures below about 150°C in ambient air for less than about 2 days. Subsequently, in this embodiment, the cathode may be coated, for example, with an about 2µm LiPON thin-film electrolyte, an about 3µm thick Li negative anode, and an about 0.3µm thick Cu anode current collector. Finally, an about 100µm thick heat and pressure sensitive metal-polymer laminate, which may serve to encapsulate the electrochemical device, may be applied to the electrochemical device so that the electrochemical performance of the device may be tested in the ambient.

In an exemplary embodiment, a dried direct or reverse roll coated deposit may require an additional drying, adhesion, formation, and/or crystallization steps at temperatures up to, for example, about 1000°C, as described above, to finalize the structure of the cathode or composite cathode. This method is quick, simple and can produce thick cathodes without using a vacuum vapor phase method. Furthermore, the resulting cathode does not have the mechanical instability as those produced by vacuum vapor phase deposition methods.

According to an exemplary embodiment of the invention, a thick cathode may be deposited on a substrate via a doctor blade technique as disclosed by Brown in GB Patent No. 947518. This deposition method is analogous to spreading butter. Accordingly, for example, a fine blade slices into some cathode material paste, consisting of the electrochemically active material, in precursor or final form, mixed with solvents, binders, and potentially electrical conduction enhancer materials, and then spreads the cathode material paste under a certain thickness directly onto a substrate. Depending on the formulation of the cathode material paste, additional drying, adhesion, formation and/or crystallization steps at temperatures of up to about 1000°C, as described above, maybe used to form the final cathode or composite cathode. This method is quick, simple and can produce thick cathodes without using a vacuum vapor phase method. Furthermore, the resulting cathode does not have the mechanical instability as those produced by vacuum vapor phase deposition methods.

Spin coating is used in the thin-film coating industry, using a variety of standard spin coaters offered by many well-known manufacturers, such as Hitachi disclosed in JP Patent No. 1320728 and incorporated herein by reference in its entirety. Using a spin coating technique, a cathode powder is suspended or dispersed in a solvent of a low boiling point (high volatility), such as, for example, water, low-molecular mass alcohols, low-molecular mass ethers, low-molecular mass ketones, low-molecular mass esters, low-molecular mass hydrocarbons, etc. This suspension may then be dropped onto a fast spinning substrate (typically about 1000-3000 rpm) and is thus spread out quickly into a thin-film over the substrate due to the high centrifugal forces exerted on the droplets. Because of the extremely low mass or volume per unit area, thin-films of a volatile solvent evaporate quickly leaving the solute or suspended or dispersed material precipitated on the substrate. The spin coating process may be repeated multiple times so as to increase the thickness of a given film. To further the evaporation process of the solvent and the precipitation of the solute, or suspended or dispersed material, the spinning substrate may be heated. Alternatively, the spin coating suspension may additionally contain binder material or binder precursor material as well as electrical conduction enhancer material. All of these materials do not and are not intended to evaporate during the spin-coating process, either conducted at ambient conditions or at elevated temperatures, as described above, and/or vacuum. Depending on the spin coating suspension formulations, an additional drying, adhesion, formation, and/or crystallization step at temperatures of up to about 1000°C, as described above, may be required to form the final cathode or composite cathode.

According to an exemplary embodiment of the present invention, a non-vapor phase LiCoO₂ cathode film may be developed using electrophoretic deposition as discussed by Kanamura et al. in 3 Electrochem. Solid State Letters 259-62 (2000) or by Lusk in GB Patent No. 1298746. For example, micron size, fully crystallized LiCoO₂ particles may be suspended in a solution of acetone, isopropanol, and/or iodine and may enable the electrophoretic deposition of, for example, an about 9µm thick, fully crystalline LiCoO₂ cathode film onto stainless steel substrate without any columnar structure. This process may be performed, for example, at less than about 120VDC within about 30 minutes at room temperature.

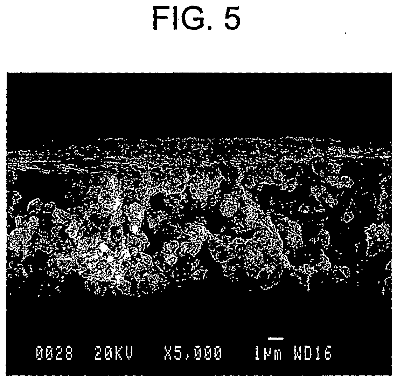

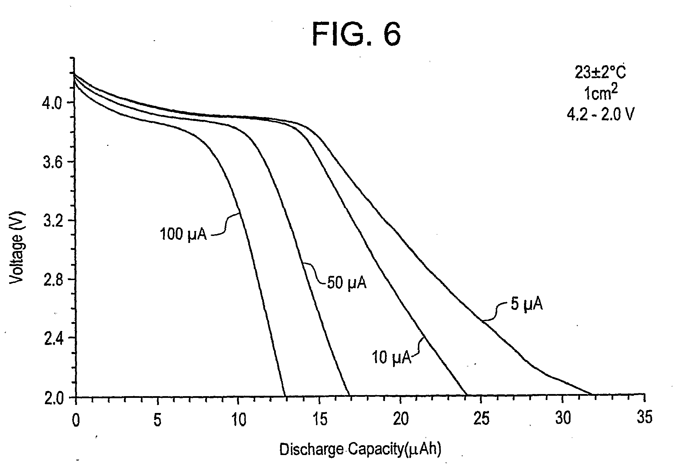

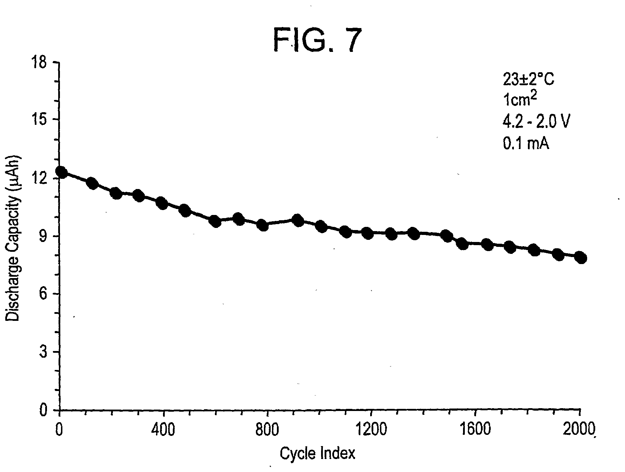

FIG. 5 depicts a scanning electron micrograph of an exemplary positive cathode film in cross-sectional view deposited with electrophoretic deposition. The potential iodine impurity concentration of the film shown in the figure is below the detection limits (<1 wt%) of the energy dispersive x-ray spectroscopic method employed. Electrochemical cells may also be fabricated with thinner LiCoO₂ composite cathodes by electrophoretic deposition, for example, in a solution consisting of about 200ml acetone, about 23mg I₂, about 38mg carbon black, and about 53mg poly(tetrafluoroethylene) (PTFE) into which about 1g of fully crystalline LiCoO₂ particle powder was suspended. In such an embodiment, the driving voltage of 50VDC for this electrophoretic deposition may be applied, for example, for about 30 seconds. Following which, the so-deposited LiCoO₂ composite film may be annealed at approximately about 377°C in air for about 4 hours to improve adhesion to the conductive substrate. Subsequently, the fabrication of the electrochemical device may be completed by depositing an about 2µm thick LiPON electrolyte using RF magnetron sputter over the LiCoO₂ composite cathode, then fabricating approximately about 0.3µm thick Cu anode current collector film by electron beam evaporation, which may then be followed by a thermal (resistive) vacuum deposition of an about 3µm thick metallic Li anode. The current-discharge voltage performance of such an electrochemical device is presented in FIG. 6, while its electrochemical cycle stability is shown in FIG. 7. Depending on the formulation of the electrophoretic suspension, an additional drying, adhesion, formation, and/or crystallization step at temperatures of up to about 1000°C, as described above, maybe required to form the final cathode or composite cathode.

According to an exemplary embodiment, a thick cathode may be deposited using a sol-gel method. In this embodiment, for example, an oxidic cathode film material to be deposited is provided in a precursor state, such as aqueous or alcoholic sols or gels of lithium and cobalt ions that are electrically balanced by anionic counter ions or chelates. These anionic counter ions or chelates may comprise, for example, nitrate, glycolate, hydroxide, citrate, carboxylates, oxalate, alcoholate, or acetylacetonate. Such formulations may be dip coated or sprayed onto the substrate and then dried at elevated temperatures for extended periods of time, for example, less than 2 days. In addition, the so-fabricated films may be subjected to a high-temperature pyrolysis process so as to convert the anionic counter ions or chelates quantitatively into pure oxides. This method is discussed in the Ph.D Thesis of Bernd J. Neudecker, Stuttgart, Germany (1994); by Plichta et al., in 139 J. Electrochem. Soc. 1509-13 (1992); and by Nazri, U.S. Patent No. 5,604,057. Alternatively, the sol-gel may additionally contain binder material or binder precursor material, as well as electrical conduction enhancer material. All of these additives do not, and are also not intended to evaporate during the drying process, either done at ambient conditions or at elevated temperatures, as described above, and/or vacuum. Depending on these sol-gel formulations, an additional drying, adhesion, formation, and/or crystallization step at temperatures of up to about 1000°C, as described above, maybe required to form the final cathode or composite cathode.

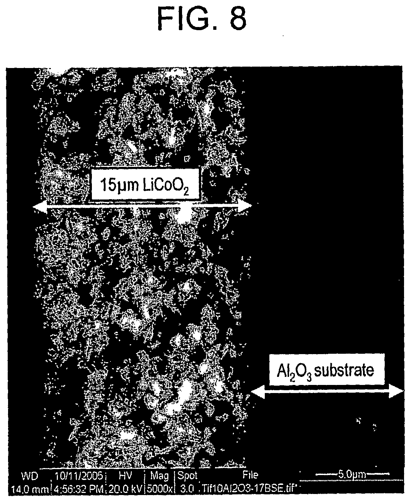

In an exemplary embodiment of the present invention, the thick cathode may be deposited using an ink-jet method. Ink-jetting of oxide film electrodes is discussed by Watanabe Kyoichi et al. in JP 2005011656, Speakman in U.S. Patent No. 6,713,389 and Hopkins et al. in U.S. Patent. No. 6,780,208. In one embodiment of the present invention, fully crystallized LiCoO₂ powder may be milled to about 0.55µm in average particle size, and then dispersed in an aqueous solution of about 0.05vol% iso-octanol, about 5vol% isopropanol, about 10vol% ethylene glycol monobutyl ether, and about 10vol% ethylene glycol. This solution may then be sonicated for about 1 hour to form a suitable ink-jet solution. The LiCoO₂ films may then be deposited through a print head and wetted ceramic, for example, about 250µm thick Al₂O₃ plates, and a stainless steel substrates well, for example, an about 50µm foil. Subsequent to the printing, the as-deposited LiCoO₂ films may be dried in air at about 200°C for about 2 hours in order to drive off excess solvent and improve the adhesion of the LiCoO₂ film to its substrate. A dried LiCoO₂ film thickness of about 15µm may be achieved based on ten print head passes over the same substrate region. A cross-sectional scanning electron micrograph view of such a LiCoO₂ film is shown in FIG. 8. Alternatively, the ink-jet solution or suspension may contain binder material, binder precursor material, and/or electrical conduction enhancer material. If used, each of these materials do not and are also not intended to evaporate during the drying process, whether at ambient conditions or at elevated temperatures, as described above, and/or in a vacuum. Depending on these formulations of the ink-jet solution or suspension, an additional drying, adhesion, formation, and/or crystallization step at temperatures of up to about 1000°C, as described above, may be required to form the final cathode or composite cathode.

According to an exemplary embodiment, a cathode fabricated by a non-vapor phase deposition may be coated, in its finished or unfinished state, for example, with an inert, metallically conducting layer, such as gold. Subsequently, a finished or unfinished cathode and an inert, metallically conducting coating may be, for example, heated together for further drying, adhesion, formation, and/or crystallization during which processes the inert, metallically conducting coating may be substantially absorbed into the pores, voids, and crevices of the cathode, thus improving the electrical conduction of the cathode.

The anode in the exemplary embodiments described above may be deposited using a variety of methods. For example, the anode material may be deposited using a vacuum vapor phase growth method, or a non-vapor phase growth method, such as ink-jetting or dip coating.

An exemplary embodiment of the present invention includes depositing a negative anode material via a vacuum vapor phase growth method. Typical vapor phase growth methods for negative anodes include, but are not limited to, reactive or non-reactive RF magnetron sputtering, reactive or non-reactive DC diode sputtering, reactive or non-reactive thermal (resistive) evaporation, reactive or non-reactive electron beam evaporation, ion-beam assisted deposition, or plasma enhanced chemical vapor deposition. The negative anode may either be, for example, metallic lithium, a lithium alloy, or a metal that can form a solid solution or a chemical compounds with lithium.

Other exemplary embodiments may include non-vapor phase growth methods for depositing a negative anode. For example, non-vapor phase growth methods, such as ink-jetting of metallic lithium powder mixtures may be used to deposit a negative anode. Such methods are described by Nelson et al. in U.S. Patent Publication No. 2005/0239917. As well, for example, one could simply dip a sample into molten lithium under a protective atmosphere and allow the resulting film on the sample to cool and solidify. Analogously, one may fabricate a lithium-ion anode, such as metallic tin, by dipping a sample into molten tin under air atmosphere or transfer the molten or hot tin on a flattened face of a, for example, rod and then stamp the tin onto the sample.

A dip coating technique via sol-gel route may similarly work for depositing negative anode materials as described, for example, by Patrusheva et al. in RU Patent No. 2241281 C2, which is incorporated herein by reference in its entirety. For example, SnO₂ based Li-ion anodes using suitable anionic formulations of alkoxides may be used, as described by Toki Motoyuki in U.S. Patent. No. 6,235,260.

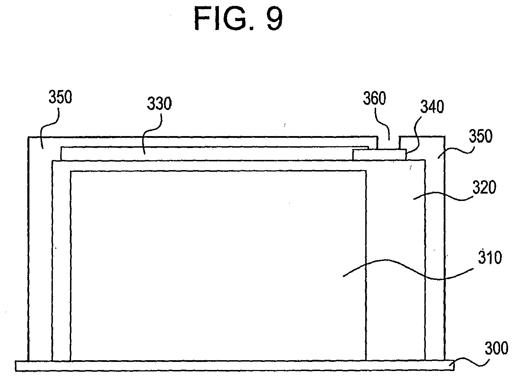

FIG. 9 shows an exemplary hybrid thin-film electrochemical device fabricated without a substrate according to an embodiment of the present invention. This device is similar to that shown in FIG. 2, but does not have a substrate. Instead, the device is spatially terminated by a thin metal layer 300 that may be used, for example, as a current collector and electrical terminal. In addition to this thin metal layer 300, the device in FIG. 9 comprises at least a cathode 310, an electrolyte 320, and an anode 330.

The embodiments described above may be encapsulated using an encapsulation 350 selected from the group consisting of vacuum vapor phase grown thin-film encapsulation, pressure - heat lamination of protective polymer composites as described by Snyder et al. in U.S. Patent No. 6,916,679, pressure - heat lamination of metal foils coated with pressure-heat sensitive adhesive surfaces, and metal canning.

An anode current collector 340, such as Zr may be interposed between the electrolyte 320, the anode 330, and the encapsulation 350. Furthermore, a moisture barrier may be applied between the anode current collector 340 and the underlying moisture sensitive electrolyte 320 to protect latter from the environment. A material having moisture blocking properties may be selected: a) from the group of metals, semi-metals, alloys, borides, carbides, diamond, diamond-like carbon, silicides, nitrides, phosphides, oxides, fluorides, chlorides, bromides, iodides; b) from the group of any multinary compounds composed of borides, carbides, silicides, nitrides, phosphides, oxides, fluorides, chlorides, bromides, and iodides; or c) from the group of high-temperature stable organic polymers and high-temperature stable silicones. This moisture barrier, for example, may comprise ZrO₂ or ZrN and may be part of the anode current collector 340 that may be gradiented in terms of its oxide or nitride content thus reaching a stoichiometry of ZrO₂ or ZrN near the interface to the electrolyte.

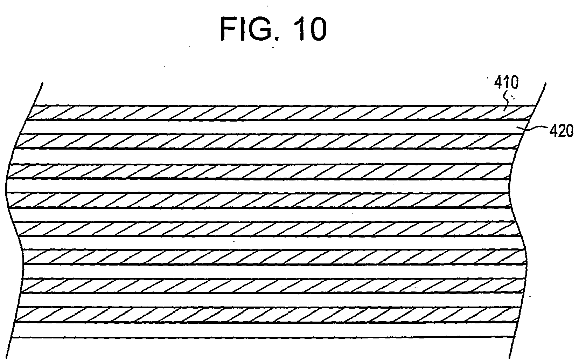

FIG. 10 shows an embodiment of an electrochemical device with a multilayer thin-film encapsulation material. The multilayer thin-film encapsulation 400 may be comprised, for example, of multiple strong metallic getter layers 410 with alternating amorphous or glassy oxide or nitride layers 420 thereof The strong metallic getter layers 410 are used to protect the device from moisture and oxygen based on their superior gettering ability for H₂O and O₂. The strong metallic getter layers may, for example, be comprised of Zr, Y, Ti, Cr, Al, or any alloy thereof. The glassy or amorphous layers 420 may be the oxides or nitrides of the metal or metals used in the getter layers, such as, for example, ZrO₂, ZrN, Y₂O₃, YN, TiO₂, TiN, Cr₂O₃, CrN, Al₂O₃, AlN, or any multi-element compound thereof. The mechanically dense glassy or amorphous layers being substantially free of grain boundaries may, for example, effectively block any moisture or oxygen diffusion through said oxides or nitrides. As a result, the multilayer thin-film encapsulation may effectively protect the underlying, air sensitive metallic anode.

In another exemplary embodiment, for example, the multilayer thin-film encapsulation consists of inorganic high-temperature stable or resilient materials. Using such an encapsulation increases the high temperature stability of the electrochemical device as compared with an electrochemical device that employs polymeric components in its encapsulation, such as is the case in the above-mentioned pressure-heat laminated encapsulation described by Snyder et al. in U.S. Patent No. 6,916,679.

Another exemplary embodiment of inorganic high-temperature stable or resilient materials may include a multilayer thin-film encapsulation having vacuum vapor phase deposited alternating layers. For example, a thin-film encapsulation may comprise or consist of 30 alternating 1000Å thick layers of the sequence ZrO₂ /Zr / ZrO₂ / Zr /... or ZrN / Zr / ZrN / Zr /..., although it is to be understood that different sized thickness, periods and materials may be used. These alternating layers may be deposited at less than about 100°C substrate temperature in one vacuum chamber pump-down from ambient pressures, for example. Such an exemplary 30 multilayer thin-film encapsulation may, for example, be only about 3µm thick and high-temperature stable to far above about 300°C.

As those skilled in the art will appreciate, the mere thinness of such a thin-film encapsulation directly increases the energy, capacity, and power of a given electrochemical device per unit volume (volumetric energy, volumetric capacity, and volumetric power) compared with an electrochemical device that uses a pressure-heat laminated encapsulation, which is typically thicker by at least one order of magnitude than the presented thin-film encapsulation of about 3µm. For example, the volumetric quantities of energy, capacity, and power can increase three-fold when for a given electrochemical device of, for example, 150µm in total packaged thickness, which may comprise an actual electrochemical cell of, for example, 10µm in thickness, a, for example, 35µm thick substrate, and a, for example, 100µm thick pressure-heat laminate, the encapsulation is replaced by a thin-film encapsulation of, for example, 3µm in thickness, which results in an overall thickness of the electrochemical device of 48µm.

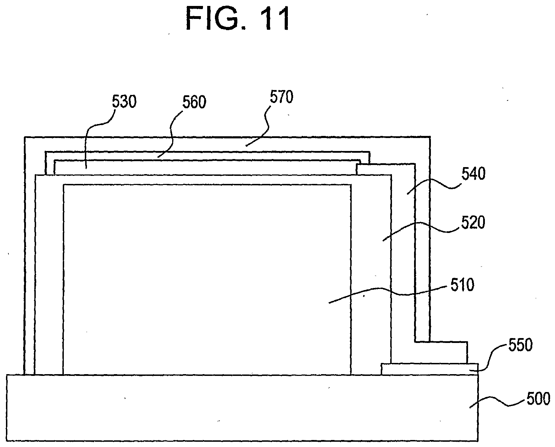

FIG. 11 shows an electrochemical device according to an exemplary embodiment of the present invention. In addition to the electrically conductive substrate 500, the positive cathode 510, the electrolyte film 520, the negative anode 530, the anode current collector 540, and the electrical insulation layer 550, this embodiment includes an encapsulation layer 570. This encapsulation may be, for example, a multilayer encapsulation as described above and as shown in FIG. 10. Between the encapsulation layer 570 and the anode 530, for example, a second LiPON layer 560 maybe interposed. The encapsulation layer 570 may be fabricated onto the anode 530, which may comprise metallic lithium. The softness of the anode 530 material may cause the encapsulation layer 570 to crack due to the mechanically weak fundament provided by the soft anode 530 and/or the stress imbalance at the interface of the anode 530 encapsulation 570. Once cracked, the encapsulation 570 may cause exposure of the sensitive anode 530 to the ambient, which may destroy the anode. Using a glassy LiPON (or derivative) modulator layer 560, for example, may mechanically stabilize the soft anode surface while chemically encapsulating it.

FIG. 11, the cathode 510 may be thick when compared to the relative sizes of the electrolyte 520, substrate 500 (and cathode current collector in some embodiments), anode 530, anode current collector 540, electrical insulation layer 550, modulating LiPON layer 560, and thin-film encapsulation 570.

The underlying LiPON electrolyte layer 520 together with the overlying LiPON modulator layer 560 confine the interposed anode 530 while protecting it, not only mechanically, but also chemically. In this configuration, a metallic anode 530, such as, for example, metallic Lithium, may be melted when heated above its melting point at about 181°C. Due to its spatial confinement, chemical protection, and inertness towards LiPON well above the melting point of lithium, the metallic lithium anode 530 remains fixed at location and intact as a negative anode material inside of the described electrochemical device. This engineering design also enables the described electrochemical device being used in solder reflow processing or flip chip processing.

Many materials may be used as the anode, for example, copper lithium alloy or solid solutions, such as, LiₓCu, LiₓZr, LiₓV, LiₓW, LiₓBe, LiₓBe_{y}Cu, etc. Those skilled in the art will recognize these and other materials that may be used for the anode. These alloys or solid solutions of lithium may offer stronger mechanical properties compared with soft metallic lithium, and thus may allow the direct deposition of the multilayer thin-film encapsulation 570 without the use of the above -described LiPON modulator layer 560 interposed between the soft negative metallic anode 530 and the multilayer thin-film encapsulation 570. In such case, the LiPON modulator layer 560 may be redundant.

In an example of the embodiment shown in FIG. 11, an electrochemical device maybe fabricated, for example, onto a 25.4mm x 25.4mm large aluminum substrate of 25µm in thickness (500), coated with a 80µm x 3.3 cm² large LiCoO₂ composite positive cathode consisting of 62 volume % of LiCoO₂ powder and the volume balance of polymeric binder and electronically conducting carbon black powder (510), a 1.5µm thin film of solid state LiPON electrolyte (520), a 10µm thick negative, metallic lithium anode (530), a 0.5µm thick nickel anode current collector (540), a 0.5µm thick ZrO₂ electrical insulation layer (550), a 0.5µm thick LiPON modulator layer (560), and a 3µm thick multilayer thin-film encapsulation layer consisting of fifteen 1000 Å thick Zr / 1000 Å thick ZrO₂ bi-stacks (570). In this example, the electrochemical device is 120µm thick at its thickest cross-section and provides 10mAh of continuous capacity within the voltage range of 4.2 - 3.0V with an average voltage of 4.0V, which results in a volumetric energy of 520 Wh/liter for the fully packaged electrochemical device. When using a 10µm aluminum substrate instead of the 25µm thick one, then the volumetric energy of this device increases from 520 Wh/liter to 590 Wh/liter.

In another exemplary embodiment, a barrier layer may be included. This barrier layer may be deposited onto a substrate, such as, for example, a metal foil substrate, wherein the barrier layer chemically separates the battery part (i.e., electrochemically active cell) from the substrate part of an electrochemical apparatus. The barrier may prevent diffusion of any contaminants entering the battery from the substrate as well as, for example, block ions from escaping the battery and diffusing into the substrate during both battery fabrication and during battery operating and storage conditions. Certain potentially suitable materials for a barrier layer may include poor ion conducting materials, for example, such as borides, carbides, diamond, diamond-like carbon, silicides, nitrides, phosphides, oxides, fluorides, chlorides, bromides, iodides, and any multinary compounds thereof. Of those compounds, electrically insulating materials may further prevent possible reactions between the substrate and the battery layers from occurring. For example, if a possible chemical reaction includes the diffusion of ions and electrons, an insulating barrier would provide a way to block the electrons, and thus prevent any such chemical reaction. However, a barrier layer may comprise electrically conducting materials as well, as long as they do not conduct any of the ions of the substrate or battery layer materials. For instance, ZrN is an effective conducting layer that will prevent ion conduction. In some cases metals, alloys, and/or semi-metals may serve as a sufficient barrier layer depending on the anneal temperatures applied during the battery fabrication process and substrate material used. The diffusion barrier layer may, for example, be single or multi-phase, crystalline, glassy, amorphous or any mixture thereof, although glassy and amorphous structures are preferred in some applications due to their lack of grain boundaries that would otherwise serve as locations for increased, but unwanted, ion and electron conduction.

A thin-film encapsulation layer, such as the one shown in FIGS. 10 & 11, may, for example, tent over the device. Therefore, a flexible encapsulation may, for example, be used to allow the device to expand and contract. The above-described glass-metal multilayer encapsulation possesses appropriate flexible properties, which can be tailored, for example, by changing the sputter deposition parameters, which then changes the densities of the glass and/or metal. Another approach to tuning the mechanical properties of the constituents of the thin-film encapsulation, and thus also the thin-film encapsulation itself may include changing the stoichiometry of one or more constituents of the thin-film encapsulant. For instance, ZrN can be changed to Zr₂N, which is equivalent to depriving the particular composition of this layer of nitride. Alternatively, one can change the metals in the stack. For example, instead of a Zr, ZrN, Zr, ZrN stack, one could fabricate a multilayer thin-film encapsulation consisting of Zr, AlN, Cr, TiN.

Some of the embodiments above discuss a thick positive cathode that is inexpensive and reliable. The thick cathode may also be configured with a thin electrolyte, a thin anode, and a thin encapsulation so as to maximize the volumetric densities of capacity, energy, and power of the resulting electrochemical device.

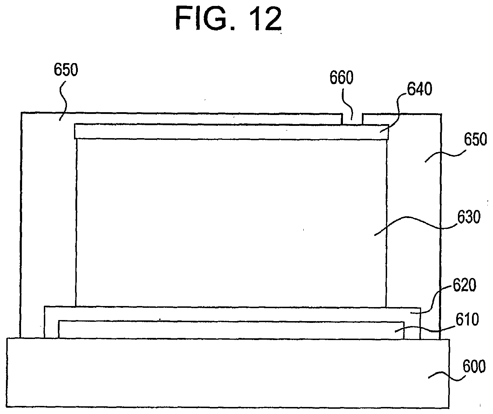

FIG. 12 shows another embodiment of the present invention, which depicts a configuration variant of the electrochemical device shown in FIG. 2 and termed inverted thin-film battery configuration. The negative anode 610 is chosen from the same materials and fabricated by the same methods as described for FIG. 2, when deposited directly onto substrate 600, which in turn is electrically conducting and chemically inert, such as, for example, Cu foil, to the anode 610. In this particular configuration, the substrate also serves as the anode current collector and negative terminal of a battery. If the substrate 600 is electrically insulating, then an additional anode current collector, consisting of, for example, Cu or Ni, may be interposed between said substrate 600 and the negative anode 610 (not shown). Electrical access to this anode current collector may be accomplished, for example, by either extending the anode current collector beyond the edge of the encapsulation 650 or providing an opening in the substrate 600. The opening in the substrate may then be filled with a conductive material, such as a Cu paste, in a manner that this material makes electrical contact with the anode current collector. Using the same materials and methods as for the electrolyte in FIG. 2, the electrolyte 620 is deposited over the anode 610. Using the same materials and methods as for the positive cathode in FIG. 2, the positive cathode 630 is deposited over the electrolyte 620. To allow electrical access to the positive cathode 630, a cathode current collector 640, such as Al or Au, is fabricated on top of the positive cathode 630. If encapsulation 650 is used on an electrochemical device, then one may provide an opening 660 in encapsulation 650 to allow electrical access to the positive cathode 630.

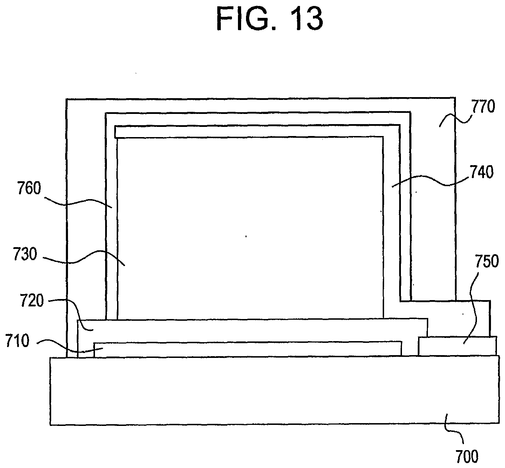

Analogously, an electrochemical device maybe fabricated with inverted thin-film battery configuration using the elements, materials and methods described in regard to FIG. 11. Such an electrochemical device, for example, is shown in FIG. 13. First, a negative anode 710 is directly deposited onto a chemically inert substrate 700. To avoid short-circuiting of an electrochemical device, an electrically insulating layer 750 may be fabricated, which may be partially coated with an electrolyte 720 and may entirely tent over the anode 710. After depositing the electrolyte 720, the positive cathode 730 may be deposited followed by a cathode current collector 740. To employ a thin-film encapsulation 770 over the existing layers in the fabrication sequence of the electrochemical device, a mechanical and chemical modulation layer 760, for example, may be applied mainly over that area in the battery part of the electrochemical device which is defined by the cathode. Those skilled in the art will appreciate that the invention covers additional inverted configurations, which may be achieved by way of combining constituent parts of the non-inverted batteries described above.

In another embodiment, a barrier layer may be fabricated between the substrate and the battery part of the electrochemical device as described in U.S. patent application Serial No. 11/209,536, entitled Electrochemical Apparatus with Barrier Layer Protected Substrate, filed 23 August 2005. Depending on the material and configuration of the barrier layer, one or more additional current collectors may be fabricated onto the barrier layer so as to improve the electrical contact to the positive cathode, the negative anode or both.

The embodiments described above are exemplary only. One skilled in the art may recognize variations from the embodiments specifically described here, which are intended to be within the scope of this disclosure. As such, the invention is limited only by the following claims. Thus, it is intended that the present invention cover the modifications of this invention provided they come within the scope of the appended claims. Further, specific explanations or theories regarding the formation or performance of electrochemical devices according to the present invention are presented for explanation only and are not to be considered limiting with respect to the scope of the present disclosure or the claims.

## Claims

1. A battery comprising:
a non-vapor phase deposited positive cathode greater than or equal to 0.5 µm and less than or equal to 200 µm thick and comprising a lithium compound, wherein the non-vapor phase deposited positive cathode is fabricated using a non-vapor phase deposition method selected from the group consisting of slurry coating, Meyer rod coating, direct and reverse roll coating, doctor blade coating, spin coating, electrophoretic deposition, sol-gel deposition, spray coating, dip coating and inkjetting;
an electrolyte less than or equal to 10 µm thick on the cathode;
an inert, metallically conducting material, wherein the inert, metallically conducting material substantially resides in pores, voids and crevices of the cathode between the cathode and the electrolyte;
a substrate of the battery of less than or equal to 50 µm in thickness;
a negative anode less than or equal to 30 µm thick on the electrolyte.

2. The battery of claim 1, wherein the positive cathode being greater than or equal to 4 µm thick.

3. The battery of claim 1, wherein the cathode is adjacent to the substrate.

4. The battery of claim 1, further comprising said substrate of less than or equal to 10µm in thickness.

5. The battery of any of claims 1 to 4, wherein said substrate is selected from the group of aluminum and aluminum alloys.

6. The battery of any of claims 1 to 5, wherein said substrate comprises a current collector.

7. The battery of any of claims 1 to 6, further comprising a barrier layer on said substrate.

8. The battery of claim 7, wherein said barrier layer is adapted to prevent electrons from migrating between the substrate and either the anode or cathode.

9. The battery of claim 8, wherein said barrier layer is adapted to prevent electrons from migrating between the substrate and either the anode or cathode.

10. The battery of any of claims 1 to 9, further comprising a current collector.

11. The battery of any of claims 1 to 10, wherein said cathode is greater than or equal to 5 µm and less than or equal to 100 µm thick.

12. The battery of claim 11, wherein said cathode is greater than or equal to 30 µm and less than or equal to 80 µm thick.

13. The battery of claim 1, wherein said electrolyte is a thin-film electrolyte.

14. The battery of any of claims 1 to 12, wherein said cathode is deposited by slurry coating cathode powder material, binder material, and electrical conduction enhancer material.

15. The battery of any of claims 1 to 14, wherein said cathode is deposited using a Meyer rod coating technique a direct roll coating technique, a reverse coating technique, or a doctor blade technique.

16. The battery of any of claims 1 to 12, wherein said cathode is deposited by spin coating, by electrophoretic deposition, or by an ink-jetting process.

17. The battery of any of claims 1 to 16, wherein said cathode comprises LiCoO2 or a derivative thereof.

18. The battery of claim 17, wherein said LiCoO2 or derivative thereof is doped with elements selected from the group of elements from Groups 1 through 17 of a periodic table.

19. The battery of any of claims 1 to 18, wherein said cathode comprises a material from the group consisting of LiCoO₂ LiMn₂O₄, LiMnO₂, LiNiO₂, LiFePO₄, LiVO₂, and any mixture thereof.

20. The battery of claim 19, wherein said cathode is formed into a structure with a plurality of vertical structures.

21. The battery of claim 20, wherein the plurality of vertical structures are formed using mechanical means.

22. The battery of claims 20 and/or claim 21, wherein the vertical structures have a height less than the thickness of the cathode material.

23. The battery of any of claims 20 to 22, wherein said plurality of vertical structures are configured to decrease the average distance between any volume element within said cathode and a closest volume element of said electrolyte layer that is opposite to said cathode.

24. The battery of any of claims 20 to 23, wherein said plurality of vertical structures are configured to decrease the average distance between any volume element within said cathode and the closest volume element of said electrolyte layer that is opposite to said cathode.

25. The battery of claim 1, wherein said electrolyte comprises lithium phosphorus oxynitride (LiPON).

26. The battery of claim 1, wherein said anode is selected from lithium, lithium alloy, a metal that can form a solid solution or a chemical compound with lithium, and any lithium-ion compound that can serve as a negative anode.

27. The battery of any of claims 1, 13 and/or 25, wherein said electrolyte is deposited by a vacuum vapor phase growth method.

28. The battery of claim 1, further comprising an encapsulation formed with an encapsulation process selected from vacuum vapor phase grown thin-film encapsulation, pressure-heat lamination of protective polymer composites, pressure-heat lamination of metal foils coated with pressure-heat sensitive adhesive surfaces, and metal canning.

29. The battery of claim 28, further comprising an encapsulation grown by a vacuum vapor phase process.

30. The battery of claim 29, wherein said encapsulation consists of a multilayer stack of inorganic compounds and metals.

31. The battery of claim 29 and/or 30, wherein said encapsulation is thinner than or equal to 10µm.

32. The battery of any of claims 29 to 31, wherein said encapsulation is separated from the negative anode by an interposed modulation layer.

33. The battery of claim 32, wherein said modulation layer comprises LiPON.

34. The battery of claim 33, wherein said modulation layer consists of LiPON.

35. The battery of any of claims 1 to 34, further comprising an anode current collector.

36. The battery of claim 35, wherein a moisture barrier is interposed between said anode current collector and said electrolyte.

37. The battery of claim 36, wherein said moisture barrier comprises a material having moisture blocking properties, and is selected from metals, semi-metals, alloys, borides, carbides, diamond, diamond-like carbon, silicides, nitrides, phosphides, oxides, fluorides, chlorides, bromides, and iodides.

38. The battery of claims 36 and/or 37, wherein said moisture barrier comprises a material having moisture blocking properties, and is selected from any multinary compounds composed of borides, carbides, silicides, nitrides, phosphides, oxides, fluorides, chlorides, bromides, and iodides.

39. The battery of claims 36 and/or 37, wherein said moisture barrier comprises a material having moisture blocking properties, and is selected from high-temperature stable organic polymers and high-temperature stable silicones.

40. The battery of claim 1, further comprising a cathode current collector.

41. The battery of claim 35, wherein said anode current collector is covered, at least in part, by a moisture barrier.

42. The battery of claim 36, wherein said moisture barrier comprises ZrO₂.

43. A method of manufacturing a battery of any of claims 1 to 42 comprising:
depositing a cathode using a non-vapor phase deposition process on a substrate that is less than or equal to 50 µm in thickness;
coating the cathode with an inert, metallically conducting material and heating the coating and the cathode so that the inert, metallically conducting material is substantially absorbed in pores, voids and crevices of the cathode;
depositing an electrolyte that is less than about 10 µm thick on the cathode, wherein the inert, metallically conducting material in the pores, voids and crevices of the cathode is between the cathode and the electrolyte; and
depositing an anode.

44. The method of manufacturing a battery of claim 43 comprising:
depositing a positive cathode that is greater than or equal to 0.5 µm and less than or equal to 200 µm thick;
depositing an electrolyte that is less than or equal to 10 µm thick; and
depositing a negative anode that is less than or equal to 30 µm thick.

45. The method of claims 43 and/or 44, wherein said cathode is deposited on a substrate.

46. The method of any of claims 43 to 45, wherein said step of depositing a cathode comprises a) coating said cathode in its finished or unfinished state with a material selected from the group of inert metal and alloy; and b) applying sufficient heat to substantially absorb said material into said cathode.

## Patentansprüche

1. Batterie, umfassend:
eine nicht-dampfphasenabgeschiedene positive Kathode, die grösser oder gleich 0.5 µm und kleiner oder gleich 200 µm dick ist und eine LithiumVerbindung umfasst, wobei die nicht-dampfphasenabgeschiedene positive Kathode mit einem Nicht-Dampfphasenabscheideverfahren, ausgewählt aus der Gruppe bestehend aus Schlammbeschichtung, Meyer-Stabbeschichtung, direkte und gegenläufige Walzenbeschichtung, Rakelbeschichtung, Schleuderbeschichtung, elektrophoretischer Abscheidung, Sol-Gel-Abscheidung, Sprühbeschichtung, Tauchbeschichtung und Tintenstrahlen, gefertigt wird;
einen Elektrolyten, der kleiner oder gleich 10 µm dick auf der Kathode ist;
ein inertes, metallisch leitendes Material, wobei das inerte, metallisch leitende Material im Wesentlichen in Poren, Leeräumen und Spalten der Kathode zwischen der Kathode und dem Elektrolyten liegt;
ein Substrat der Batterie, das kleiner oder gleich 50 µm dick ist;
eine negative Anode, die kleiner oder gleich 30 µm dick auf dem Elektrolyten ist.

2. Batterie nach Anspruch 1, wobei die positive Kathode grösser oder gleich 4 µm dick ist.

3. Batterie nach Anspruch 1, wobei die Kathode neben dem Substrat ist

4. Batterie nach Anspruch 1, ferner das Substrat mit einer Dicke von kleiner oder gleich 10 µm umfassend.

5. Batterie nach irgendeinem der Ansprüche 1 bis 4, wobei das Substrat ausgewählt ist aus der Gruppe bestehend aus Aluminium und Aluminiumlegierungen.

6. Batterie nach irgendeinem der Ansprüche 1 bis 5, wobei das Substrat einen Stromabnehmer umfasst.

7. Batterie nach irgendeinem der Ansprüche 1 bis 6, ferner eine Sperrschicht auf dem Substrat umfassend.

8. Batterie nach Anspruch 7, wobei die Sperrschicht angepasst ist, um Elektronen daran zu hindern zwischen dem Substrat und entweder der Anode oder der Kathode umzusiedeln.

9. Batterie nach Anspruch 8, wobei die Sperrschicht angepasst ist, um Elektronen daran zu hindern zwischen dem Substrat und entweder der Anode oder der Kathode umzusiedeln.

10. Batterie nach irgendeinem der Ansprüche 1 bis 9, ferner einen Stromabnehmer umfassend.

11. Batterie nach irgendeinem der Ansprüche 1 bis 10, wobei die Kathode grösser oder gleich 5 µm und kleiner oder gleich 100 µm dick ist.

12. Batterie nach Anspruch 11, wobei die Kathode grösser oder gleich 30 µm und kleiner oder gleich 80 µm dick ist.

13. Batterie nach Anspruch 1, wobei der Elektrolyt ein Dünnschichtelektrolyt ist

14. Batterie nach irgendeinem der Ansprüche 1 bis 12, wobei die Kathode durch Schlammbeschichten von Kathodenpulvermaterial, Bindemittel und Material zum Verstärken der elektrischen Leitung abgeschieden wird.

15. Batterie nach irgendeinem der Ansprüche 1 bis 14, wobei die Kathode unter der Verwendung einer Meyer-Stabbeschichtungstechnik, einer direkten Walzenbeschichtungstechnik, einer gegenläufigen Beschichtungstechnik oder einer Rakelbeschichtungstechnik abgeschieden wird.

16. Batterie nach irgendeinem der Ansprüche 1 bis 12, wobei die Kathode durch Schleuderbeschichtung, durch elektrophoretische Abscheidung oder durch ein Tintenstrahlverfahren abgeschieden wird.

17. Batterie nach irgendeinem der Ansprüche 1 bis 16, wobei die Kathode LiCoO₂ oder ein Derivat davon umfasst.

18. Batterie nach Anspruch 17, wobei das LiCoO₂ oder das Derivat davon mit Elementen ausgewählt aus der Gruppe bestehend aus Elementen der Gruppe 1 bis 17 des Periodensystems dotiert ist.

19. Batterie nach irgendeinem der Ansprüche 1 bis 18, wobei die Kathode ein Material aus der Gruppe bestehend aus LiCoO₂ LiMn₂O₄, LiMnO₂, LiNiO₂, LiFePO₄, LiVO₂ und jede Mischung davon umfasst.

20. Batterie nach Anspruch 19, wobei die Kathode zu einer Struktur mit einer Vielzahl von vertikalen Strukturen geformt ist.

21. Batterie nach Anspruch 20, wobei die Vielzahl von vertikalen Strukturen mit mechanischen Mitteln geformt ist.

22. Batterie nach den Ansprüchen 20 und/oder Anspruch 21, wobei die Vielzahl von vertikalen Strukturen eine Höhe aufweisen, die kleiner als die Dicke des Kathodenmaterials ist.

23. Batterie nach irgendeinem der Ansprüche 20 bis 22, wobei die Vielzahl von vertikalen Strukturen konfiguriert ist, um den gemittelten Abstand zwischen jedem Volumenelement in der Kathode und einem nächstliegenden Volumenelement der Elektrolytschicht, welche der Kathode gegenüberliegt, zu verringern.

24. Batterie nach irgendeinem der Ansprüche 20 bis 23, wobei die Vielzahl von vertikalen Strukturen konfiguriert ist, um den gemittelten Abstand zwischen jedem Volumenelement in der Kathode und dem nächstliegenden Volumenelement der Elektrolytschicht, welche der Kathode gegenüberliegt, zu verringern.

25. Batterie nach Anspruch 1, wobei der Elektrolyt Lithium-Phosphor-Oxynitrid (LiPON) umfasst.

26. Batterie nach Anspruch 1, wobei die Anode ausgewählt ist aus Lithium, einer Lithiumlegierung, einem Metall, das eine feste Lösung bilden kann, oder einer chemischen Verbindung mit Lithium und jeder Lithiumionenverbindung, die als negative Anode dienen kann.

27. Batterie nach irgendeinem der Ansprüche 1, 13 und/oder 25, wobei der Elektrolyt durch ein Vakuumdampfphasenwachstumsverfahren abgeschieden wird.

28. Batterie nach Anspruch 1, ferner eine Einkapselung umfassend, welche mit einem Verfahren, ausgewählt aus der Gruppe bestehend aus Vakuumdampfphasenwachstums-Dünnschicht-Einkapselung, Druck-Wärme-Laminierung von Schutzpolymerverbindungen, Druck-Wärme-Laminierung von mit Druck-Wärme-empfindlichen Klebeflächen beschichteten Metallfolien und Metall-Verpackung, gebildet wird.

29. Batterie nach Anspruch 28, ferner eine Einkapselung umfassend, die durch ein Vakuumdampfphasenverfahren gewachsen ist.

30. Batterie nach Anspruch 29, wobei die Einkapselung aus einem mehrschichtigen Stapel aus anorganischen Verbindungen und Metallen besteht.

31. Batterie nach Anspruch 29 und/oder 30, wobei die Einkapselung dünner oder gleich 10µm ist.

32. Batterie nach irgendeinem der Ansprüche 29 bis 31, wobei die Einkapselung von der negativen Anode durch eine zwischengeschaltete Modulationsschicht getrennt ist.

33. Batterie nach Anspruch 32, wobei die Modulationsschicht LiPON umfasst.

34. Batterie nach Anspruch 33, wobei die Modulationsschicht aus LiPON besteht.

35. Batterie nach irgendeinem der Ansprüche 1 bis 34, ferner einen Anodenstromabnehmer umfassend.

36. Batterie nach Anspruch 35, wobei eine Feuchtigkeitssperre zwischen den Anodenstromabnehmer und den Elektrolyten zwischengeschaltet ist.

37. Batterie nach Anspruch 36, wobei die Feuchtigkeitssperre ein Material umfasst, das feuchtigkeitsblockierende Eigenschaften aufweist und das ausgewählt ist aus Metallen, Halbmetallen, Legierungen, Boriden, Carbiden, Diamant, diamantähnlichem Kohlenstoff, Siliciden, Nitriden, Phosphiden, Oxiden, Fluoriden, Chloriden, Bromiden und Iodiden.

38. Batterie nach den Ansprüchen 36 und/oder 37, wobei die Feuchtigkeitssperre ein Material umfasst, das feuchtigkeitsblockierende Eigenschaften aufweist und das aus beliebigen multinären Verbindungen, die aus Boriden, Carbiden, Siliciden, Nitriden, Phosphiden, Oxiden, Fluoriden, Chloriden, Bromiden und Iodiden zusammengesetzt sind, ausgewählt ist.

39. Batterie nach den Ansprüchen 36 und/oder 37, wobei die Feuchtigkeitssperre ein Material umfasst, das feuchtigkeitsblockierende Eigenschaften aufweist und das aus hochtemperaturstabilen organischen Polymeren und hochtemperaturstabilen Silikonen ausgewählt ist.

40. Batterie nach Anspruch 1, ferner einen Kathodenstromabnehmer umfassend.

41. Batterie nach Anspruch 35, wobei der Anodenstromabnehmer zumindest teilweise mit einer Feuchtigkeitssperre abgedeckt ist.

42. Batterie nach Anspruch 36, wobei die Feuchtigkeitssperre ZrO₂ umfasst.

43. Verfahren zum Herstellen einer Batterie nach irgendeinem der Ansprüche 1 bis 42, umfassend:
Abscheiden einer Kathode unter der Verwendung eines Nicht-Dampfphasenabscheideverfahrens auf einem Substrat, die kleiner oder gleich 50 µm dick ist;
Beschichten der Kathode mit einem inerten, metallisch leitenden Material und Wärmen der Beschichtung und der Kathode, so dass das inerte, metallisch leitende Material im Wesentlichen in Poren, Leeräumen und Spalten der Kathode zwischen der Kathode und dem Elektrolyten absorbiert wird;
Abscheiden eines Elektrolyten, der weniger als ungefähr 10 µm dick auf der Kathode ist, wobei das inerte, metallisch leitende Material in den Poren, Leeräumen und Spalten der Kathode zwischen der Kathode und dem Elektrolyten ist;
Abscheiden einer Anode.

44. Verfahren zum Herstellen einer Batterie nach Anspruch 43, umfassend:
Abscheiden einer positiven Kathode, die grösser oder gleich 0.5 µm und kleiner oder gleich 200 µm dick ist;
Abscheiden eines Elektrolyten, der kleiner oder gleich 10 µm dick ist;
Abscheiden einer negativen Anode, die kleiner oder gleich 30 µm dick ist.

45. Verfahren nach den Ansprüchen 43 und/oder 44, wobei die Kathode auf einem Substrat abgeschieden wird.

46. Verfahren nach irgendeinem der Ansprüche 43 bis 45, wobei der Schritt des Abscheidens einer Kathode umfasst a) Beschichten der Kathode in ihrem fertigen oder unfertigen Zustand mit einem Material, ausgewählt aus der Gruppe von inertem Metall und Legierung; und b) Anwenden von ausreichender Wärme, um das Material im Wesentlichen in der Kathode zu absorbieren.

## Revendications

1. Batterie comprenant :
une cathode positive déposée par un procédé autre qu'en phase vapeur, ayant une épaisseur supérieure ou égale à 0,5 µm et inférieure ou égale à 200 µm, comprenant un composé du lithium, la cathode positive déposée par un procédé autre qu'en phase vapeur étant fabriquée par utilisation d'un procédé de dépôt autre qu'en phase vapeur, choisi dans le groupe consistant en le revêtement en suspension, le revêtement à la barre de Meyer, le revêtement par rouleau direct et inversé, le revêtement à la racle, le revêtement à la tournette, le dépôt électrophorétique, le dépôt sol-gel, le revêtement par pulvérisation, le revêtement par immersion et l'application au jet d'encre ;
un électrolyte, ayant une épaisseur inférieure ou égale à 10 µm, sur la cathode ;
un matériau inerte à conduction métallique, le matériau inerte à conduction métallique se trouvant sensiblement dans des pores, des vides et des crevasses de la cathode entre la cathode et l'électrolyte ;
un substrat de la batterie, ayant une épaisseur inférieure ou égale à 50 µm ;
une anode négative, ayant une épaisseur inférieure ou égale à 30 µm, sur l'électrolyte.

2. Batterie selon la revendication 1, dans laquelle la cathode positive a une épaisseur supérieure ou égale à 4 µm.

3. Batterie selon la revendication 1, dans laquelle la cathode est contigüe au substrat.

4. Batterie selon la revendication 1, comprenant en outre ledit substrat qui a une épaisseur inférieure ou égale à 10 µm.

5. Batterie selon l'une quelconque des revendications 1 à 4, dans laquelle ledit substrat est choisi dans le groupe consistant en l'aluminium et les alliages d'aluminium.

6. Batterie selon l'une quelconque des revendications 1 à 5, dans laquelle ledit substrat comprend un collecteur de courant.

7. Batterie selon l'une quelconque des revendications 1 à 6, comprenant en outre une couche barrière sur ledit substrat.

8. Batterie selon la revendication 7, dans laquelle ladite couche barrière est conçue pour empêcher que des électrons ne migrent entre le substrat et soit l'anode, soit la cathode.

9. Batterie selon la revendication 8, dans laquelle ladite couche barrière est conçue pour empêcher que des électrons ne migrent entre le substrat et l'anode ou bien la cathode.

10. Batterie selon l'une quelconque des revendications 1 à 9, comprenant en outre un collecteur de courant.

11. Batterie selon l'une quelconque des revendications 1 à 10, dans laquelle ladite cathode a une épaisseur supérieure ou égale à 5 µm et inférieure ou égale à 100 µm.

12. Batterie selon la revendication 11, dans laquelle ladite cathode a une épaisseur supérieure ou égale à 30 µm et inférieure ou égale à 80 µm.

13. Batterie selon la revendication 1, dans laquelle ledit électrolyte est un électrolyte à couche mince.

14. Batterie selon l'une quelconque des revendications 1 à 12, dans laquelle ladite cathode est déposée par application en suspension d'un matériau en poudre pour cathode, d'un matériau liant et d'un matériau renforçateur de conduction électrique.

15. Batterie selon l'une quelconque des revendications 1 à 14, dans laquelle ladite cathode est déposée par utilisation d'une technique de revêtement à la barre de Meyer, d'une technique de revêtement direct au rouleau, d'une technique de revêtement inversé ou d'une technique à la racle.

16. Batterie selon l'une quelconque des revendications 1 à 12, dans laquelle ladite cathode est déposée par revêtement à la tournette, par dépôt électrophorétique ou par un procédé au jet d'encre.

17. Batterie selon l'une quelconque des revendications 1 à 16, dans laquelle ladite cathode comprend du LiCoO₂ ou un dérivé de celui-ci.

18. Batterie selon la revendication 17, dans laquelle ledit LiCoO₂ ou ledit dérivé de celui-ci est dopé par des éléments choisis dans le groupe d'éléments appartenant aux groupes 1 à 17 d'un tableau périodique.

19. Batterie selon l'une quelconque des revendications 1 à 18, dans laquelle ladite cathode comprend un matériau du groupe consistant en LiCoO₂ LiMn₂O₄, LiMnO₂, LiNiO₂, LiFePO₄, LiVO₂, et tous mélanges de ceux-ci.

20. Batterie selon la revendication 19, dans laquelle ladite cathode est formée en une structure ayant une pluralité de structures verticales.

21. Batterie selon la revendication 20, dans laquelle la pluralité de structures verticales sont formées par utilisation de moyens mécaniques.

22. Batterie selon la revendication 20 et/ou la revendication 21, dans laquelle les structures verticales ont une hauteur inférieure à l'épaisseur du matériau de cathode.

23. Batterie selon l'une quelconque des revendications 20 à 22, dans laquelle ladite pluralité de structures verticales sont configurées de façon à diminuer la distance moyenne entre tout élément de volume à l'intérieur de ladite cathode et un élément de volume le plus proche de la couche d'électrolyte qui est opposée à ladite cathode.

24. Batterie selon l'une quelconque des revendications 20 à 23, dans laquelle ladite pluralité de structures verticales sont conçues pour diminuer la distance moyenne entre tout élément de volume à l'intérieur de la cathode et l'élément de volume le plus proche de la couche d'électrolyte qui est opposée à ladite cathode.

25. Batterie selon la revendication 1, dans laquelle ledit électrolyte comprend de l'oxynitrure de lithium et de phosphore (LiPON).

26. Batterie selon la revendication 1, dans laquelle ladite anode est choisie parmi le lithium, un alliage de lithium, un métal pouvant former une solution solide ou un composé chimique avec le lithium, et tout composé lithium-ion qui peut servir d'anode négative.

27. Batterie selon l'une quelconque des revendications 1, 13 et/ou 25, dans laquelle ledit électrolyte est déposé par un procédé de croissance en phase vapeur sous vide.

28. Batterie selon la revendication 1, comprenant en outre une encapsulation formée par un procédé d'encapsulation choisi parmi l'encapsulation en couche mince avec croissance en phase vapeur sous vide, le contrecollage sous l'effet de la chaleur et de la pression de composites polymères protecteurs, le contrecollage sous l'effet de la chaleur et de la pression de feuilles métalliques revêtues de surfaces adhésives sensibles à la chaleur et à la pression, et la mise en boite métallique.

29. Batterie selon la revendication 28, comprenant en outre une encapsulation que l'on a fait croitre par un procédé en phase vapeur sous vide.

30. Batterie selon la revendication 29, dans laquelle ladite encapsulation consiste en un empilement multicouche de composés inorganiques et de métaux.

31. Batterie selon la revendication 29 et/ou 30, dans laquelle ladite encapsulation a une épaisseur inférieure ou égale à 10 µm.

32. Batterie selon l'une quelconque des revendications 29 à 31, dans laquelle ladite encapsulation est séparée de l'anode négative par une couche de modulation interposée.

33. Batterie selon la revendication 32, dans laquelle ladite couche de modulation comprend du LiPON.

34. Batterie selon la revendication 33, dans laquelle ladite couche de modulation consiste en LiPON.

35. Batterie selon l'une quelconque des revendications 1 à 34, comprenant en outre un collecteur de courant anodique.

36. Batterie selon la revendication 35, dans laquelle une barrière anti-humidité est intercalée entre ledit collecteur de courant anodique et ledit électrolyte.

37. Batterie selon la revendication 36, dans laquelle ladite barrière anti-humidité comprend un matériau ayant des propriétés de blocage de l'humidité, et est choisie parmi les métaux, les métalloïdes, les alliages, les borures, les carbures, le diamant, le carbone sous forme de diamant amorphe, les siliciures, les nitrures, les phosphures, les oxydes, les fluorures, les chlorures, les bromures et les iodures.

38. Batterie selon les revendications 36 et/ou 37, dans laquelle ladite barrière anti-humidité comprend un matériau ayant des propriétés de blocage de l'humidité, et est choisie parmi tous composés multinaires composés de borures, de carbures, de siliciures, de nitrures, de phosphures, d'oxydes, de fluorures, de chlorures, de bromures et d'iodures.

39. Batterie selon les revendications 36 et/ou 37, dans laquelle ladite barrière anti-humidité comprend un matériau ayant des propriétés de blocage de l'humidité, et est choisie parmi les polymères organiques stables aux hautes températures et les silicones stables aux hautes températures.

40. Batterie selon la revendication 1, comprenant en outre un collecteur de courant cathodique.

41. Batterie selon la revendication 35, dans laquelle ledit collecteur de courant anodique est, au moins en partie, couvert par une barrière anti-humidité.

42. Batterie selon la revendication 36, dans laquelle ladite barrière anti-humidité comprend du ZrO₂.

43. Procédé de fabrication d'une batterie selon l'une quelconque des revendications 1 à 42, comprenant :
le dépôt d'une cathode par utilisation d'un procédé de dépôt autre qu'en phase vapeur sur un substrat ayant une épaisseur inférieure ou égale à 50 µm ;
l'application sur la cathode d'un matériau inerte à conduction métallique, et le chauffage du revêtement et de la cathode de façon que le matériau inerte à conduction électrique soit sensiblement absorbé dans des pores, des vides et des crevasses de la cathode ;
le dépôt d'un électrolyte ayant une épaisseur inférieure à environ 10 µm sur la cathode, le matériau inerte à conduction métallique se trouvant dans les pores, les vides et les crevasses de la cathode se trouvant entre la cathode et l'électrolyte ; et
le dépôt d'une anode.

44. Procédé de fabrication d'une batterie selon la revendication 43, comprenant :
le dépôt d'une cathode positive ayant une épaisseur supérieure ou égale à 0,5 µm et inférieure ou égale à 200 µm ;
le dépôt d'un électrolyte ayant une épaisseur inférieure ou égale à 10 µm ; et
le dépôt d'une anode négative ayant une épaisseur inférieure ou égale à 30 µm.

45. Procédé selon les revendications 43 et/ou 44, dans lequel ladite cathode est déposée sur un substrat.

46. Procédé selon l'une quelconque des revendications 43 à 45, dans lequel ladite étape de dépôt d'une cathode comprend a) l'application, sur ladite cathode, dans son état fini ou non fini, d'un matériau choisi dans le groupe consistant en les métaux inertes et les alliages ; et b) l'application d'une chaleur suffisante pour faire sensiblement absorber ledit matériau par ladite cathode.
